(19) Europäisches Patentamt / European Patent Office / Office européen des brevets

(11) **EP 3 545 679 B1**

(12) **EUROPEAN PATENT SPECIFICATION**

(45) Date of publication and mention
of the grant of the patent:
**24.08.2022  Bulletin 2022/34**

(21) Application number: **16805816.2**

(22) Date of filing: **02.12.2016**

(51) International Patent Classification (IPC):
**H04N 19/176** *(2014.01)*    **H04N 19/11** *(2014.01)*
**H04N 19/136** *(2014.01)*    **H04N 19/14** *(2014.01)*

(52) Cooperative Patent Classification (CPC):
**H04N 19/11; G06N 3/0454; G06N 3/0481;**
**G06N 3/084; H04N 19/136; H04N 19/14;**
**H04N 19/176**

(86) International application number:
**PCT/EP2016/079663**

(87) International publication number:
**WO 2018/099579 (07.06.2018 Gazette 2018/23)**

(54) **APPARATUS AND METHOD FOR ENCODING AN IMAGE**

VORRICHTUNG UND VERFAHREN ZUR CODIERUNG EINES BILDES

APPAREIL ET PROCÉDÉ DE CODAGE D'UNE IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2019  Bulletin 2019/40**

(73) Proprietor: **Huawei Technologies Co., Ltd.
Longgang District
Shenzhen, Guangdong 518129 (CN)**

(72) Inventors:
• **ZHAO, Zhijie
  80992 Munich (DE)**
• **LAUDE, Thorsten
  30167 Hannover (DE)**
• **MUNDERLOH, Marco
  30167 Hannover (DE)**
• **OSTERMANN, Joern
  30167 Hannover (DE)**

(74) Representative: **Gill Jennings & Every LLP
The Broadgate Tower
20 Primrose Street
London EC2A 2ES (GB)**

(56) References cited:
**EP-A2- 2 063 644**

• **Dilip Prasana Kumar: "Intra Frame Luma
Prediction using Neural Networks in HEVC", , 22
July 2013 (2013-07-22), XP055354235, University
of Texas Arlington Retrieved from the Internet:
URL:https://uta-ir.tdl.org/uta-ir/bitstrea
m/handle/10106/11804/Kumar_uta_2502M_1220
3 .pdf?sequence=1&isAllowed=y [retrieved on
2017-03-13]**
• **YU XIANYU ET AL: "VLSI friendly fast CU/PU
mode decision for HEVC intra encoding:
Leveraging convolution neural network", 2015
IEEE INTERNATIONAL CONFERENCE ON IMAGE
PROCESSING (ICIP), IEEE, 27 September 2015
(2015-09-27), pages 1285-1289, XP032826629,
DOI: 10.1109/ICIP.2015.7351007 [retrieved on
2015-12-09]**
• **MING YANG ET AL: "H.264/AVC Intra-only Coding
(iAVC) and Neural Network Based Prediction
Mode Decision", TOOLS WITH ARTIFICIAL
INTELLIGENCE (ICTAI), 2010 22ND IEEE
INTERNATIONAL CONFERENCE ON, IEEE,
PISCATAWAY, NJ, USA, 27 October 2010
(2010-10-27), pages 57-60, XP031837830, ISBN:
978-1-4244-8817-9**

**(Cont. next page)**

- **LIU ZHENYU ET AL: "CNN oriented fast HEVC intra CU mode decision", 2016 IEEE INTERNATIONAL SYMPOSIUM ON CIRCUITS AND SYSTEMS (ISCAS), IEEE, 22 May 2016 (2016-05-22), pages 2270-2273, XP032942042, DOI: 10.1109/ISCAS.2016.7539036 [retrieved on 2016-08-09]**

**Description**

TECHNICAL FIELD

The present invention relates to an apparatus and a method for encoding a block of an image or a video sequence. The apparatus and the method are particularly designed for encoding a block of an image or a video sequence using intra-prediction coding.

BACKGROUND

During the last decades a tremendous improvement of video coding algorithms was observed. In January 2013, the Joint Collaborative Team on Video Coding (JCT-VC) of ITU-T VCEG and ISO/IEC MPEG finished the technical work for the latest video coding standard, High Efficiency Video Coding (HEVC). The superior coding efficiency of HEVC is achieved at the expense of very complex encoders. One main complexity driver for HEVC encoders is the comprehensive rate-distortion (RD) optimization which is indispensable to fully exploit all benefits of the HEVC standard. The RD optimization consists in the evaluation of all combination possibilities (coding modes, parameters for these coding modes, partitioning, etc.) and the selection of the combination with the smallest RD costs. In case of the intra prediction, the RD optimization determines the intra prediction mode. Specifically, for HEVC, there are 33 angular intra prediction modes, the DC mode and the planar mode. A major disadvantage of the RD optimization is that encoders which cannot afford a comprehensive RD optimization will likely not accomplish the optimal coding efficiency.

The encoding process can be accelerated by pruning the list of intra prediction modes which are evaluated during the RD optimization. For instance, it is possible to take advantage of the correlation between the intra prediction mode of the current block and the intra prediction modes of adjacent blocks.

Dilip Prasana Kumar, "Intra Frame Luma Prediction using Neural Networks in HEVC", University of Texas Arlington, (20130722), XP055354235, discloses use of artificial neural networks in intra frame processing implementing HEVC.

YU XIANYU ET AL, "VLSI friendly fast CU/PU mode decision for HEVC intra encoding: Leveraging convolution neural network", 2015 IEEE INTERNATIONAL CONFERENCE ON IMAGE PROCESSING (ICIP), IEEE, (20150927), doi:10.1109/ICIP.2015.7351007, pages 1285 - 1289, XP032826629 discloses use of convolutional neural networks in intra frame processing implementing HEVC.

SUMMARY

The object of the present invention is therefore to provide an apparatus and method for efficiently encoding a block of an image using intra-prediction coding. The above object is achieved by the solutions provided in the enclosed independent claims. Advantageous implementations are defined in the respective dependent claims.

A first aspect of the present invention provides an apparatus for encoding a block of an image using intra-prediction coding as set out in appended claim 1.

By using the neural network, the process for deciding intra prediction mode does not rely on manually designed features. Instead, features are determined by the learning process of neural network. Thereby, the neural network can output accurate intra prediction modes because complex properties of the image which are hardly captured by manually designed features can be taken into consideration. Apparatus according to the first aspect allow to select the intra-prediction mode for each block independently from other, e.g. neighboring, blocks, and thus facilitate parallel processing and to reduce the overall time to select the intra-prediction modes for all blocks to be processed or encoded.

Moreover, even though the apparatus cannot afford a comprehensive RD optimization, it will accomplish an optimal coding efficiency.

The neural network comprises a first convolutional layer, a second convolutional layer, a pooling layer, a first fully-connected layer and a second fully-connected layer.

Thereby, a good trade-off between a low training error and a good generalization to previously unseen data is achieved since the capacity of the neural network is reduced.

Each of the convolutional layer and fully-connected layer may comprise rectified linear units (ReLU) for the activation of the neurons in the layer. Due to the piecewise linearity of the ReLU functions, the gradients for the back propagation algorithm are computable efficiently.

As set out in claim 1, a size of the second filter kernel is dependent on size of the block.

Thereby, the apparatus has high compatibility. For a smaller block, the filter size of the second convolutional layer may be reduced to cope with smaller blocks. Otherwise, a larger filter size allows the collection of more data and thus output more accurate intra prediction modes. For example, size of the second filter kernel is k1 if size of the block is not smaller than 16x16, size of the second filter kernel is k2 if size of the block is smaller than 16x16, and wherein k1 is larger than k2.

In a first implementation form of the apparatus according to the first aspect as such, the data associated to the obtained block comprises image data of the block, wherein the image data comprises luminance and/or chrominance.

In a second implementation form of the apparatus according to the first implementation form of the first aspect, the data associated to the obtained block further comprises non-image data of the block wherein the non-image data comprises any one or any combination of a block size, target bit rate, a quantization parameter (QP), histogram of gradients (HoG), and edge information.

Thereby, accuracy of the prediction mode decision is improved.

In a third implementation form of the apparatus according to the first aspect as such or according to any preceding implementation form of the first aspect, the processor is configured to process the data associated to the block independently from reconstructed data associated to other blocks of the image and/or intra-prediction decisions for other blocks.

Thereby, the selection of the CNN is independent from the actual encoding process (e.g. any previous encoder decisions and/or reconstructed sample values). So the learning models of the CNN can be applied in parallel to the image encoding process without introducing additional latency.

In an fourth implementation form of the apparatus according to the first aspect as such or according to any preceding implementation form of the first aspect, the processor is configured to: process the obtained block using a neural network trained to select a subset of intra-prediction modes from the set of pre-determined intra-prediction modes for the block; and select one intra-prediction mode from the subset of intra-prediction modes based on rate distortion optimization, RDO, for the intra-prediction processing.

A second aspect of the present invention provides an apparatus for encoding a block of an image using intra-prediction coding as set out in appended claim 6.

A third aspect of the present invention provides a method for encoding a block of an image using intra-prediction coding as set out in appended claim 7.

In a first implementation form of the method according to the third aspect as such , the data associated to the obtained block comprises image data of the block, wherein the image data comprises luminance and/or chrominance.

In a second implementation form of the method according to the first implementation form of the third aspect, the data associated to the obtained block further comprises non-image data of the block wherein the non-image data comprises any one or any combination of a block size, target bit rate, a quantization parameter (QP), histogram of gradients (HoG), and edge information.

In a third implementation form of the method according to the third aspect as such or according to any preceding implementation form of the third aspect, the processor is configured to process the data associated to the block independently from reconstructed data associated to other blocks of the image and/or intra-prediction decisions for other blocks.

In an fourth implementation form of the method according to the third aspect as such or according to any preceding implementation form of the third aspect, the processor is configured to: process the obtained block using a neural network trained to select a subset of intra-prediction modes from the set of pre-determined intra-prediction modes for the block; and select one intra-prediction mode from the subset of intra-prediction modes based on rate distortion optimization, RDO , for the intra-prediction processing.

A fourth aspect of the present invention provides a computer program with program code means for performing some or all previously shown steps or for performing the method according to the third aspect or any of its implementation forms if the program is executed on a computer or a digital signal processor.

A fifth aspect of the present invention provides a computer program product having a computer readable medium with stored program code means for performing some or all previously shown steps or for performing the method according to the third aspect or any of its implementation forms if the program is executed on a computer or a digital signal processor.

BRIEF DESCRIPTION OF THE DRAWINGS

The above described aspects and implementation forms of the present invention will be explained in the following description of specific embodiments in relation to the enclosed drawings, in which:

Fig. 1    shows an apparatus for encoding a block of an image using intra-prediction coding according to an embodiment of the present invention.

Fig. 2    shows a convolutional neural network (CNN) according to an embodiment of the present invention.

Fig. 3    shows CNN training process according to an embodiment of the present invention.

Fig. 4 shows an apparatus for encoding a block of an image using intra-prediction coding according to an embodiment of the present invention.

Fig. 5 shows an apparatus for encoding a block of an image using intra-prediction coding according to an embodiment of the present invention.

Fig. 6 shows a video encoder for encoding a block of an image using intra-prediction coding according to an embodiment of the present invention.

Fig. 7 shows an apparatus for encoding a block of an image using intra-prediction coding according to an embodiment of the present invention.

Fig. 8 shows a method for encoding a block of an image using intra-prediction coding according to an embodiment of the present invention.

## DETAILED DESCRIPTION OF THE EMBODIMENTS

Illustrative embodiments of apparatus, method and program product for encoding an image using intra-prediction coding are described with reference to the various figures. Although this description provides a detailed example of possible implementations, it should be noted that the details are intended to be exemplary and in no way limit the scope of the application.

Moreover, an embodiment/example may refere to other embodiments/examples. For example, any description including but not limited to terminology, element, process, explanation and/or technical advantage mentioned in one embodiment/example is applicative to the other embodiments/examples.

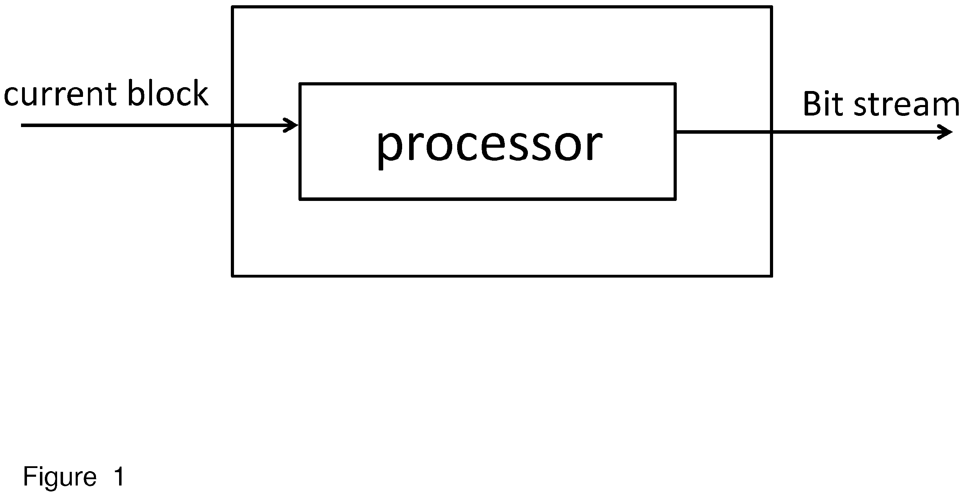

Figure 1 shows an apparatus for encoding a block of an image using intra-prediction coding according to an embodiment of the present invention. An image may also be called as a picture. Since a video can be processed as combination of images, the apparatus can be applied to video encoding.

In this embodiment, the apparatus generally includes a processor that is configured to obtain the block of the image, process data associated to the obtained block using a neural network that is trained to select an intra-prediction mode from a set of pre-determined intra-prediction modes, and perform intra-prediction processing for the block according to the selected intra-prediction mode.

The block is an MxN (M-column by N-row) array of samples, or an MxN array of transform coefficients. The image may be obtained from an input video. The set of pre-determined intra-prediction modes may comprise the 35 intra prediction modes defined by HEVC standard or the prediction modes defined by other hybrid codec, for example Advanced Video Coding (AVC).

The neural network used by the processor is a convolutional neural network (CNN). Conceptually, in one embodiment, the data associated to the obtained block (e.g. the original input samples of the current block) are parsed through the CNN. By using CNN, the process for deciding intra prediction mode does not rely on manually designed features. Instead, features are determined by the learning process of our CNN. Thereby, the CNN can output an accurate intra prediction mode because complex properties of the video signal which are hardly captured by manually designed features can be taken into consideration. The architecture and training process of CNN will be described in detail later.

The data associated to the obtained block comprises original image data of the block and optionally non-image data associated to the obtained block.

1. Original image data

The original image data comprises luminance and/or chrominance data. Luminance is information indicating the brightness of an image sample. Chroma is information indicating the color of an image sample, which may be described in terms of red difference chroma component (Cr) and blue difference chroma component (Cb).

Embodiments of the invention are implemented to use original image data as (image) data associated to the block to be processed. Such original image data may be filtered or preprocessed but is not reconstructed image data, e.g. encoded and consecutively decoded image data (e.g. reconstructed samples, e.g. of neighboring blocks). In other words, embodiments of the invention are implemented to use non-reconstructed image data, Embodiments of the invention may also be implemented to select the intra-prediction mode of the (current) block independent of any prediction decision for other blocks (e.g. neighboring blocks).

Since the block is obtained from an original input image, the decisions of the CNN are computable independently from the actual encoding process (e.g. any previous encoder decisions and reconstructed sample values). So the learning models of the CNN can be applied in parallel to the video encoding process without introducing additional latency. That is, all decisions could be carried out independently for all blocks.

Moreover, if multiple representations of a video are encoded (e.g. for streaming providers), a single classification for the best intra prediction mode can be used by all encoders. Therefore the efficiency of the encoding is improved.

If the data associated to the block is the original image data, the processor may be configured to process the data associated to the block independently from data associated to other blocks of the image. For example, the processor is configured to process the data associated to the block independently from reconstructed data associated to other (e.g. neighboring) blocks of the image and/or intra-prediction decisions for other (e.g. neighboring) blocks.

2. Non-image data

The non-image data comprises any one or any combination of a block size, target bit rate, a quantization parameter (QP), histogram of gradients (HoG), and edge information.

The non-image data may be provided by the encoder. The QP is a variable used by the encoding or decoding process of HEVC or AVC or other hybrid codecs for scaling of transform coefficient levels. The HoG is a feature which is known from the computer vision literature. The occurrences of gradient orientation are counted for blocks. The edge information describes edges in the block to be coded. Various edge detection methods could be used to determine the edge information.

These additional non-image data allow the CNN to be adapted to the state or current configuration of the encoder and therefore allow to improve the quality of the decisions by the CNN, e.g. to make the correct decisions. For example, if bit rate is low, the DC intra mode is used more often than for higher bitrates.

The adaptive network could also work for multiple encoders by parsing non-image data of the multiple encoders. For example, the CNN selects non-image data of one encoder from non-image data of the multiple encoders to process a block of this encoder.

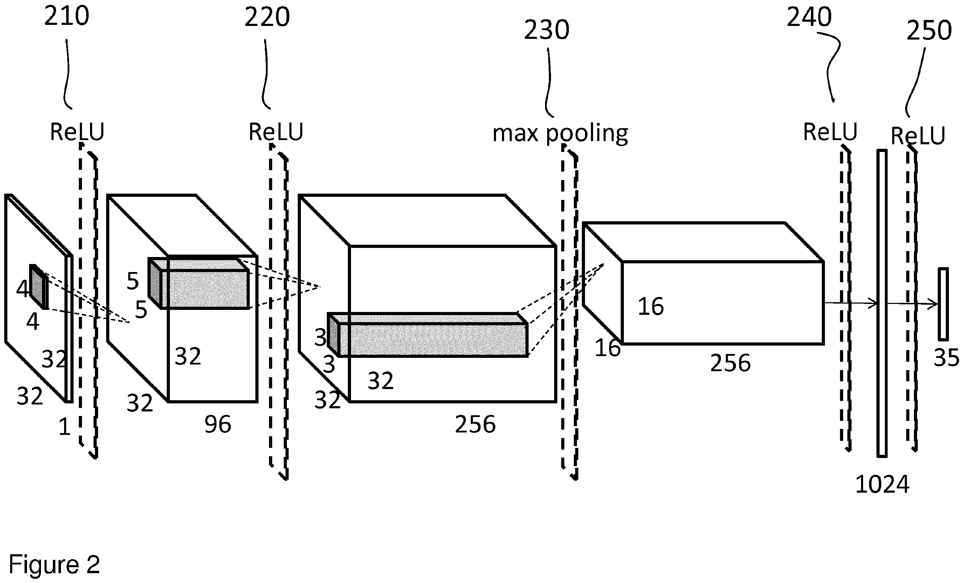

Figure 2 illustrates an embodiment of aforementioned CNN. It is important to note that the architecture and values described in this embodiment are purely for illustration purposes and do not pose any constraints on the invention as defined by the claims.

To use a CNN for obtaining one or more intra prediction modes, a mapping from the CNN output to the encoder decision for a particular intra direction is designed. For instance, the 35 different intra prediction modes defined by the HEVC standard (33 angular modes, the DC mode, and the planar mode) can be considered as different classes for the classification process. For example, the i-th class can map to the i-th intra mode. For example, class 26 can map to the intra mode 26 (i.e. the vertical angular mode). Consequently, the sample values of the input blocks can be classified into these classes. Therefore the encoder in figure 1 is able to use the CNN to process data associated to the obtained block to select an intra-prediction mode from a set of pre-determined intra-prediction modes. For example, the encoder selects the i-th intra mode according to the mapping in case the CNN provides the i-th class.

All parameters of the CNN are chosen for the CNN to achieve a good trade-off between a low training error and a good generalization to previously unseen data. Embodiments avoid overfitting. Overfitting occurs if the capacity of the network is too high for a given set of training samples. There are various factors related to the network capacity: number of layers, number of filters per layer, etc. Furthermore, overfitting may also depend on other aspects next to the network architecture: strategies against overfitting like dropout, data augmentation, and/or more training data.

To cope with smaller input blocks and fewer classes, the capacity of the network is reduced (e.g. by eliminating some layers and reducing the filter sizes). The neural network comprises a first convolutional layer, a second convolutional layer, a pooling layer, a first fully-connected layer and a second fully-connected layer. The first convolutional layer is configured to receive the data associated to the block and to apply first filter kernels with a first predetermined stride to obtain a first convolutional output data. The second convolutional layer is configured to receive the first convolutional output data and to apply second filter kernels with a second predetermined stride to obtain a second convolutional output data. The pooling layer is configured to receive the second convolutional output and reduce spatial resolution of the second convolutional output data. The first fully-connected layer is configured to multiply the second convolutional output data by weights and summed per neuron. The second fully-connected layer is configured to classify outputs of the first fully-connected layer into predetermined intra prediction modes.

Each of the convolutional layer and fully-connected layer may comprise rectified linear units (ReLU) for the activation of the neurons in the layer. These units implement the non-linear activation function $f(x) = max(0, x)$ for the input x. Taking into account this activation function, these hidden units are very easy to optimize because of their similarity to linear units. Due to the piecewise linearity of the ReLU functions, the gradients for the back propagation algorithm are computable efficiently.

As an example shown in figure 2, a block having size of 32×32 is processed by a CNN having the five layers described above.

The first convolutional layer 210 takes the luminance components of the input block (i.e. dimension 32×32×1) and filters them with 96 filters of size 4×4 and a stride of one. Thus, the dimension of the input of the second convolutional layer 220 is 32×32×96.

Afterwards, in the second convolutional layer 220, the output data from the first convolutional layer 210 is filtered by 256 filters. As before, the spatial resolution remains unchanged, i.e. the resulting dimension of the second convolutional layer 220 is 32×32×256.

The filter size of the second convolutional layer 220 is dependent to the size of the block and may be independent from filter size of the first convolutional layer 210. In the second convolutional layer 220, the size of the filter kernel for the block not smaller than 16x16 is larger than the size of the filter kernel for the block smaller than 16x16. For example, the filter size of layer 220 may be reduced to 3×3 if the block size is smaller than 16x16. That is, the filter size of layer 220 may be reduced to cope with smaller blocks. Optionally, if the block is not smaller than 16 × 16, the filter size of layer 220 may be 5×5. A larger filter size allows the collection of more data and thus output more accurate intra prediction modes. If the block is 16 × 16, the filter size of the second convolutional layer 220 may be equal to or larger than the filter size of the first convolutional layer 210.

Subsequently, the spatial resolution of the output data of layer 220 is reduced (e.g. halved) by a max pooling layer 230. The size of the output data of layer 230 is smaller than 32×32×256 (e.g. 16×16×256).

Finally, the output data of max pooling layer 230 are fed through two fully-connected layers 240-250. The first one 240 has 1024 outputs while the second one 250 leads to a softmax output over the 35 classes indicating 35 intra prediction modes.

The parameters of one layer or a plurality of layers (which include the filter coefficients) are initialized with common values: the weights are initialized with Gaussian distributed values and the bias is initialized with constant values.

The above filter size of 4x4, 5x5, 3x3 are empirically optimized. 3x3 should be the smallest filter size. A filter with size of 2x2 may work as well. But it is not clear how much information can be obtained from a four pixel window. The next smaller filter size is 1x1. However, this would imply a multiplication of each sample value with a constant. This is probably not beneficial. When it comes to larger filter sizes it depends on the allowable stride. If the filter size is very big (say 9x9 or 11x11) and the filter is moved with a stride of 1, the output of the filter for neighbouring pixels will probably vary only slightly. Thus, the stride may be increased. When the typical block sizes are used, big strides (e.g. 5) cannot be used if the block has only 16x16 pixels. Otherwise, only few outputs may be obtained.

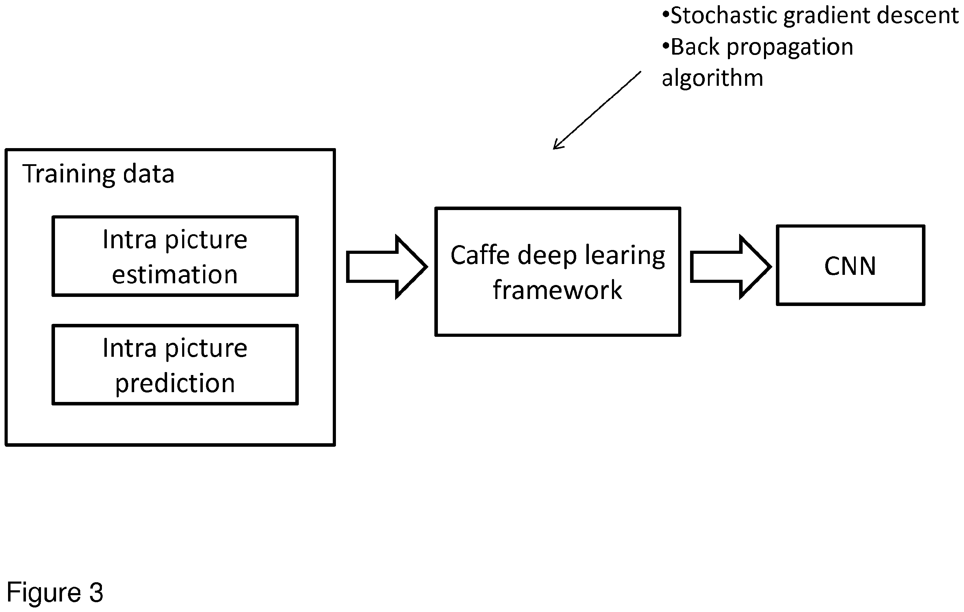

Figure 3 illustrates an embodiment of a CNN training process.

During the training process, training data are fed into the caffe network. The output of the training process is a trained CNN model that can be applied to an encoding process to obtain intra prediction mode. It can be understood by the skilled person in the art that the CNN used by the apparatus in figure 1 is actually a trained CNN model.

The training data consists of input sample values and ground truth information for the classification result. The input sample values may be obtained from image block to be encoded by a HEVC encoder as described in the background.

The well-known caffe framework is used in a CNN training process. Optionally, other optimization methods such as Adadelta, Adagrad, Adam can be used to train the CNN.

The learning of CNN can be implemented with any other deep learning framework or independently of such a framework. The caffe framework was selected for this illustration because it provides the tool chain for the entire learning process starting from the training of CNN. Considering that the distribution of selected intra prediction modes depends on the block size and the video content, separate CNN are learnt for each block size. For instance, for larger block sizes, the DC intra mode and the planar intra mode might be more suitable than the angular intra modes. On the other hand, for smaller blocks, the angular intra modes might be more suitable. Optionally, separate CNN are learnt for different quantization parameters and/or block size.

Filter coefficient of convolutional layer may be formed by weight. To optimize the weight, a back propagation algorithm based on a stochastic gradient descent solver is used. For example, let $\mu$ denote the momentum, $\lambda$ the learning rate, and i and i-1 the current and previous learning iteration, respectively. Additionally, let $\nabla L(w_{i-1})$ be the derivative of the objective function (softmax multinomial logistic loss) and $\delta$ the weight decay. With this notation, the weight $w_i$ in iteration i is calculated based on the weight in the preceding iteration $w_{i-1}$ and the previous weight update $\Delta w_{i-1} = w_{i-1} - w_{i-2}$ as shown in following formulation:

$$w_i = w_{i-1} + \mu \Delta w_{i-1} - \lambda(\delta w_{i-1} + \nabla L(w_{i-1}))$$

The learning rate is a parameter that determines how much an updating step influences the value of the current weight. If the learning rate is too small, the network will not learn anything. If the learning is too high, the update steps will overshoot and in consequence not reach the minimum in the cost function. At the beginning of the learning process, it is desired to have a high learning rate to bring the network close to the minimum of the cost function. Later on during the training process, it is desired to reduce the learning rate such that the network is directed precisely to the minimum of the cost function in small steps. For a better fine tuning at the end of the learning process, a step learning rate policy with step size $10^5$ and learning rate update 0.1 is applied. Thereby, the learning rate is multiplied by 0.1 every $10^5$ iterations.

After the training process, the CNN may be fixed and applied to any image or video to be encoded. Optionally, the trained CNN may be adapted to the current configuration of the encoder at runtime. This could happen by e.g. activating certain parts of the CNN, by feeding in additional non-image data, or by updating the weights.

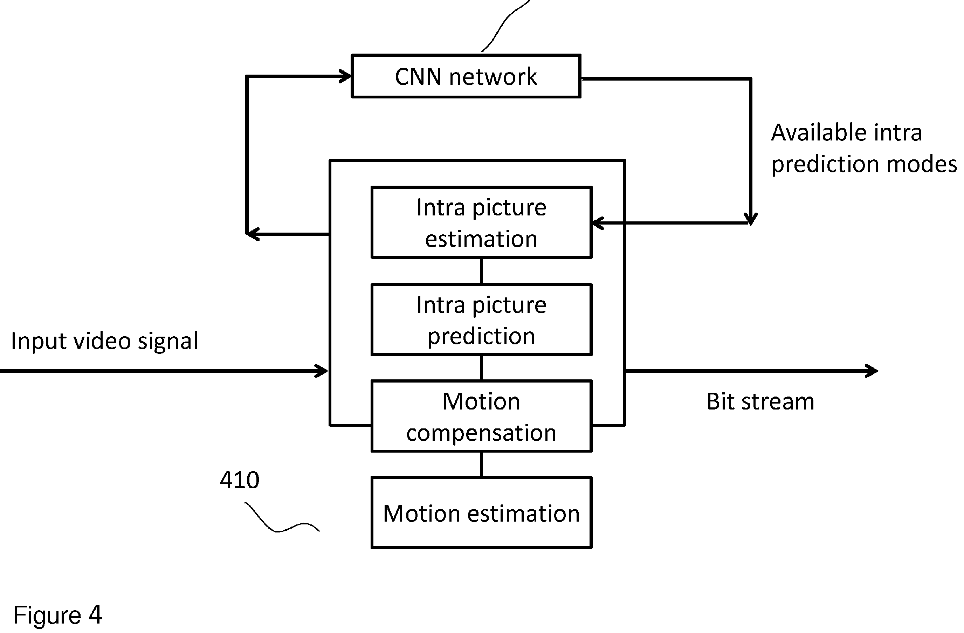

Figure 4 illustrates an example for the application of the apparatus in figure 1.

In this example, the apparatus comprises a video encoder 410 and a CNN 420 that has been trained as defined by figure 3 and its description. The video encoder 410 uses the CNN 420 to select an intra-prediction mode from a set of pre-determined intra-prediction modes.

The video encoder 410 provides a block of image to the CNN 420. The image is obtained from the input video. Based on the block from the encoder 410, the CNN 420 processes data associated to the block and outputs classification result to the video encoder 410. Therefore the video encoder 410 is able to determine the intra prediction mode or direction according to the mapping in the embodiment of figure 3.

Back in the video encoder 410, the intra picture estimation module is configured to receive the input video, obtain a block from the input video, provide the block to the CNN 420, receive classification result from the CNN 420, and select an intra-prediction mode indicated by the classification result. The intra prediction module is configured to use the intra prediction mode or direction to generate the prediction block of the being encoded block.

Thereby, even though the encoder cannot afford a comprehensive RD optimization, it will accomplish the optimal coding efficiency.

In this example, the video encoder 410 uses the CNN 420 as straight feed-forward network.

The encoder 410 in figure 4 is a simplified version without including all modules of HEVC or other hybrid video codecs. Generally, an encoder may comprise modules for partition, transform, quantization, intra picture estimation, intra picture prediction, motion estimation and motion compensation for inter picture, and entropy coding. Figure 4 only shows the encoder modules related to the current invention.

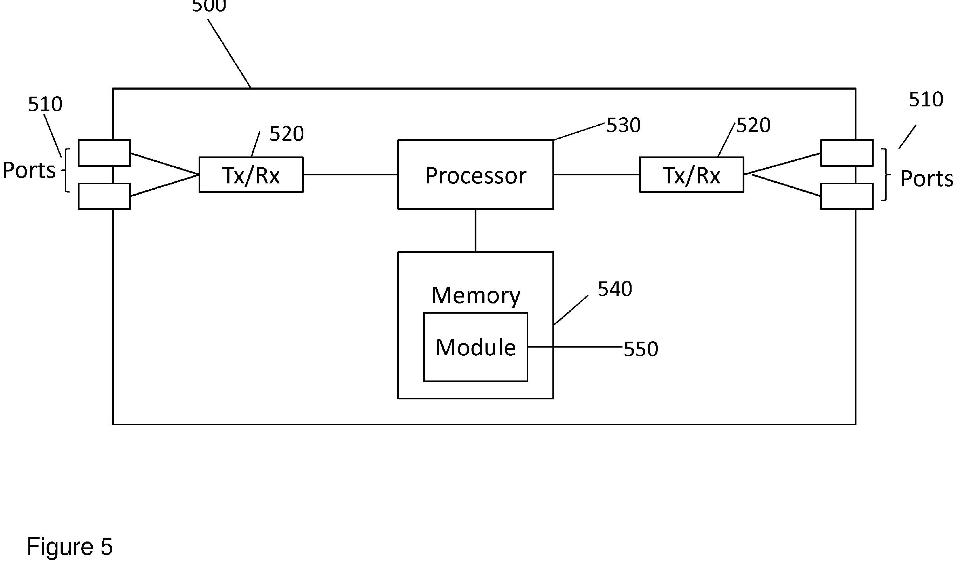

Figure 5 illustrates a network device that may be another embodiment of the apparatus of figure 1.

The network element 500 that may be a computer, server, smartphone, tablet computer, etc. The network element 500 is configured to implement the aforementioned embodiments.

In specific, network element 500 comprises ports 510, transceiver unit (Tx/Rx) 520, a processor 530, and a memory 540 comprising a coding module 550 (e.g., an intra prediction module and an intra estimation module).

Ports 510 are coupled to transceiver unit 520 which may be transmitters, receivers, or combinations thereof. The Tx/Rx 520 may receive input image and/or video via the ports 510 and transmit the input image and/or video to the processor 530.

Memory 540 is configured to store data and instructions executable to the processor 530. By executing the data and instructions of the memory 540, processor 530 is able to process the received input image and/or video. In specific, processor 530 obtains a block from the received image or an image obtained from the received video, processes data associated to the block using a neural network trained to select an intra-prediction mode from a set of pre-determined intra-prediction modes, and performs intra-prediction processing for the block according to the selected intra-prediction mode.

The network element 500 may also comprise electrical-to-optical (EO) components and optical-to-electrical (OE) components coupled to the ports 510 and Tx/Rx 520 for receiving and transmitting electrical signals and optical signals.

The processor 530 may be implemented by hardware and software. The processor 530 may be implemented as one or more central processing unit (CPU) chips, logic units, cores (e.g., as a multi-core processor), field-programmable gate arrays (FPGAs), application specific integrated circuits (ASICs), and digital signal processors (DSPs).

The memory 540 comprises one or more of disks, tape drives, and solid-state drives, or other kind of memory and may be used as an over-flow data storage device, to store programs when such programs are selected for execution, and to store instructions and data that are read during program execution. The memory 540 may be volatile and nonvolatile and may be read-only memory (ROM), random-access memory (RAM), ternary content-addressable memory (TCAM), and static random-access memory (SRAM).

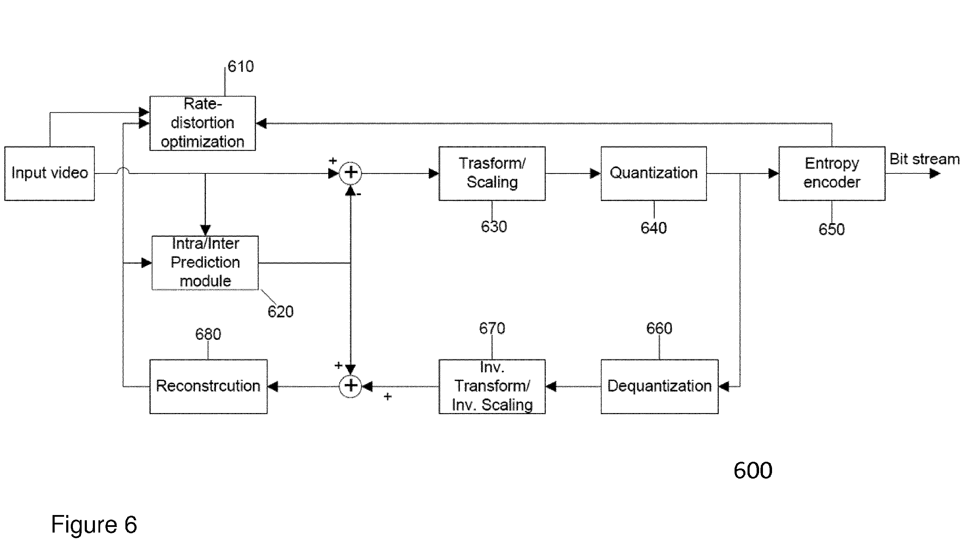

Figure 6 illustrates a video encoder 600 that may be an example of the aforementioned encoder 410.

The video encoder 600 may comprise a rate-distortion optimization (RDO) module 610, a prediction module 620, a transform module 630, a quantization module 640, an entropy encoder 650, a de-quantization module 660, an inverse transform module 670, and a reconstruction module 680. In operation, the video encoder 600 may receive an input video comprising a sequence of video pictures or slices. A slice is a spatially distinct region of an image that is independently encoded/decoded. Herein, a picture may refer to any of a predicted picture (P-picture), an intra-coded picture (I-picture), or a bi-predictive picture (B-picture). Likewise, a slice may refer to any of a P-slice, an I-slice, or a B-slice.

The RDO module 610 may be an example of the intra picture estimation module in the encoder 410. Module 610 may be configured to coordinate or make logic decisions for one or more of other modules. For example, based on one or more previously encoded pictures (e.g. output of module 680), the RDO module 610 may determine how a current picture (or slice) being encoded is partitioned into a plurality of Coding Units (CUs), and how a CU is partitioned into one or more PUs and Transform Units (TUs). CU, Prediction Unit (PU), and TU are various types of blocks used in HEVC. The idea is not limited to the structure of CU, PU and TU, and can be applied to other partition structure like quad-tree plus binary tree (QTBT). In addition, the RDO module 610 may determine how the current picture is to be predicted. The current picture may be predicted via inter and/or intra prediction. For intra prediction, there are plurality of available prediction modes or directions in HEVC and other hybrid video codecs. Definitions of the aforementioned CU, TU, and PU are listed below.

Coding Unit (CU) - a coding block of luma samples, two corresponding coding blocks of chroma samples of an image that has three sample arrays, or a coding block of samples of a monochrome picture or a picture that is coded using three separate color planes and syntax used to code the samples.

Prediction Unit (PU) - a prediction block of luminance samples, two corresponding prediction blocks of chroma samples of a picture that has three sample arrays, or a prediction block of samples of a monochrome picture or a picture that is coded using three separate color planes and syntax used to predict the prediction block samples.

Transform Unit (TU) - a transform block of luminance samples, two corresponding transform blocks of chroma samples of a picture that has three sample arrays, or a transform block of samples of a monochrome picture or a picture that is coded using three separate color planes and syntax used to predict the transform block samples.

Conventionally, an optimal mode may be determined by the RDO module 610 by checking the rate distortion performance of the available prediction modes or directions. In figure 6, an optimal mode may be determined by the RDO module 610 by the following mechanism.

The original input blocks can be provided by the video encoder as input for the CNN. Based on this input, the CNN can classify the input blocks. The classification result may be used by the RDO module 610 to determine the intra direction of each input block. In specific, one class of the classification results could correspond to one prediction mode or direction.

The classification result may provide one single class, which means that CNN may suggest one prediction mode for an input block.

It is also possible that the classification results may provide several classes, which means that the CNN selects a subset of intra-prediction modes selected from a set of pre-determined intra-prediction modes for the block and the RDO module 610 selects one intra-prediction mode from the subset of intra-prediction modes based on RDO for the intra-prediction processing. In this case, the RDO module 610 may calculate a sum of absolute error (SAE) for each prediction mode, and select a prediction mode that results in the smallest SAE.

The prediction module 620 may be configured to generate an intra or inter prediction block for a current being encoded block of the input video. In case of intra prediction, the prediction block comprises a plurality of predicted pixel samples. Each of the predicted pixel samples may be generated based on a plurality of reconstructed luminance samples located in a corresponding reconstructed spatially neighboring luminance block and/or a plurality of reconstructed chroma samples located in a corresponding spatially neighboring reconstructed chroma block.

Upon generation of the prediction block for the current block, the current block may be subtracted by the prediction block, or vice versa, to generate a residual block. The residual block may be fed into the transform module 630, which may convert residual samples into a matrix of transform coefficients via a two-dimensional orthogonal transform, such as a discrete cosine transform (DCT). Then, the matrix of transform coefficients may be quantized by the quantization module 640 before being fed into the entropy encoder 650. The quantization module 640 may alter the scale of the transform coefficients and round them to integers, which may reduce the number of non-zero transform coefficients. As a result, a compression ratio may be increased. Quantized transform coefficients may be scanned and encoded by the entropy encoder 650 into an encoded bitstream. Further, to facilitate continuous encoding of blocks, the quantized transform coefficients may also be fed into the de-quantization module 660 to recover the original scale of the transform coefficients. Then, the inverse transform module 670 may perform the inverse of the transform module 630 and generate a noisy version of the original residual block. Then, the lossy residual block may be fed into the reconstruction module 680, which may generate reconstructed samples for the prediction of future blocks. If desired, filtering may be performed on the reconstructed samples before they are used for the prediction.

It should be noted that Figure 6 may be a simplified illustration of a video encoder, thus it may include only part of modules present in the video encoder. Other modules (e.g., filter, scanner, and transmitter), although not shown in Figure 6, may also be included to facilitate video encoding as understood by one of skill in the art. In addition, depending on the encoding scheme, some of the modules in the video encoder may be skipped. For example, in lossless encoding of certain video content, no information loss may be allowed, thus the quantization module 640 and the de-quantization module 660 may be skipped. For another example, if the residual block is encoded directly without being converted to transform coefficients, the transform module 630 and the inverse transform module 670 may be skipped. Moreover, prior to transmission from the encoder, the encoded bit stream may be configured to include other information, such as video resolution, picture rate, block partitioning information (sizes, coordinates), prediction modes, etc., so that the encoded sequence of video pictures may be properly decoded by a video decoder.

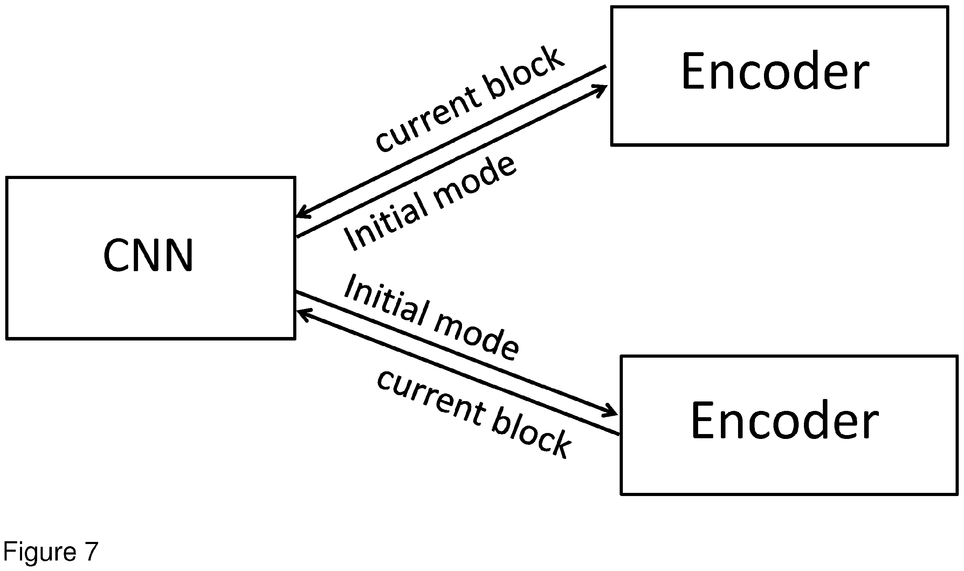

Figure 7 illustrates another example of the apparatus of figure 1.

In this example, one CNN can be used by multiple encoders during an encoding process.

The encoders provide input blocks (e.g. original blocks) to the CNN. The CNN returns classification results to the individual encoders. The CNN returns a probability distribution over the intra directions. For instance, the result can be that the probability for intra direction 23 is 80%, for direction 30 it is 10% and for direction 0 10% as well. This needs to be transformed in an encoder decision. In the example above, the encoder would pick direction 23.

The CNN may stand alone or be integrated with the encoders.

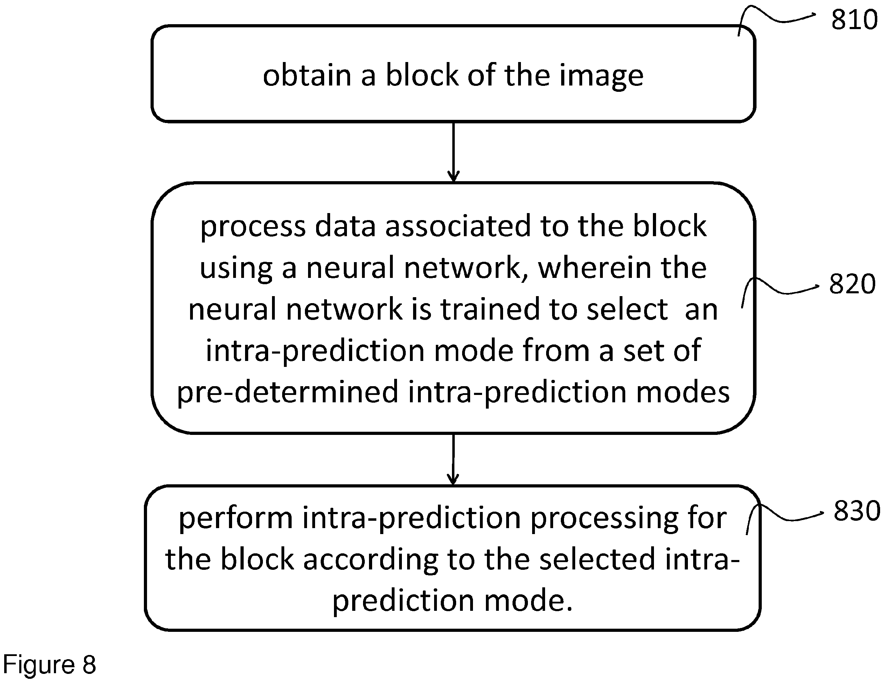

Figure 8 illustrates an embodiment of a method for encoding a block of an image using intra-prediction coding. The method maybe performed by any of the aforementioned apparatus and encoder. The method comprises following steps:

Step 810: obtaining the block of the image;

Step 820: processing data associated to the obtained block using a neural network that is trained to select an intra-prediction mode from a set of pre-determined intra-prediction modes;

Step 830: performing intra-prediction processing for the block according to the selected intra-prediction mode.

ALL of the processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as CD-ROM disks, and/or digital versatile disks (DVDs). A processor in association with software may be used to implement a radio frequency transceiver for use in a WTRU, UE, terminal, base station, RNC, and/or any host computer.

**Claims**

1. An apparatus for encoding a block of an image using intra-prediction coding comprising a processor (530), wherein the processor (530) is configured to:

   obtain (810) the block of the image;
   process (820) data associated to the block using a convolutional neural network (420) comprising a first convolutional layer (210), a second convolutional layer (220), a pooling layer (230), a first fully-connected layer (240) and a second fully-connected layer (250), wherein the convolutional neural network (420) is trained to select an intra-prediction mode from a set of pre-determined intra-prediction modes;
   perform (830) intra-prediction processing for the block according to the selected intra-prediction mode;
   **characterised in that**:

   the first convolutional layer (210) is configured to receive the data associated to the block and to apply first filter kernels with a first predetermined stride to obtain a first convolutional output data;
   the second convolutional layer (220) is configured to receive the first convolutional output data and to apply second filter kernels with a second predetermined stride to obtain a second convolutional output data;
   the pooling layer (230) is configured to receive the second convolutional output data and reduce spatial resolution of the second convolutional output data;
   the first fully-connected layer (240) is configured to multiply the second convolutional output data by weights and summed per neuron; and
   the second fully-connected layer (250) is configured to classify outputs of the first fully-connected layer (240) into predetermined intra prediction modes

   wherein a size of the second filter kernel is dependent on a size of the block and the size of the second filter kernel in the case where the block is not smaller than $16 \times 16$ is larger than the size of the second filter kernel in the case where the block is smaller than $16 \times 16$.

2. The apparatus according to claim 1, wherein the data associated to the obtained block comprises image data of the block, wherein the image data comprises luminance and/or chrominance.

3. The apparatus according to claim 2, wherein the data associated to the obtained block further comprises non-image data of the block wherein the non-image data comprises any one or any combination of a block size, target bit rate, a quantization parameter (QP), histogram of gradients (HoG), and edge information.

4. The apparatus according to any of the preceding claims, wherein the processor (530) is configured to process the data associated to the block independently from reconstructed data associated to other blocks of the image and/or intra-prediction decisions for other blocks.

5. The apparatus according to any of the preceding claims, wherein the processor (530) is configured to:

   process the obtained block using a neural network trained to select a subset of intra-prediction modes from the set of pre-determined intra-prediction modes for the block; and
   select one intra-prediction mode from the subset of intra-prediction modes based on rate distortion optimization, RDO , for the intra-prediction processing.

6. An apparatus for encoding a block of an image using intra-prediction coding, comprising a processor (530), wherein the processor (530) is configured to:

   obtain (810) a block of an input image;
   process (820) data associated to the obtained block to select an intra-prediction mode from a set of pre-determined intra-prediction modes;
   perform (830) intra-prediction processing for the block according to the selected intra-prediction mode;
   wherein the processor (530) is configured to select the intra-prediction mode as obtained by an apparatus according to any of the preceding claims when processing the same block.

7. A method for encoding a block of an image using intra-prediction coding, comprising:

   obtaining (810) the block of the image;
   processing (820) data associated to the block using a convolutional neural network (420) comprising a first convolutional layer (210), a second convolutional layer (220), a pooling layer (230), a first fully-connected layer (240) and a second fully-connected layer (250), wherein the convolutional neural network (420) is trained to select an intra-prediction mode from a set of pre-determined intra-prediction modes;
   performing (830) intra-prediction processing for the block according to the selected intra-prediction mode;
   **characterised in that**:

   the first convolutional layer (210) is configured to receive the data associated to the block and to apply first filter kernels with a first predetermined stride to obtain a first convolutional output data;
   the second convolutional layer (220) is configured to receive the first convolutional output data and to apply second filter kernels with a second predetermined stride to obtain a second convolutional output data;
   the pooling layer (230) is configured to receive the second convolutional output data and reduce spatial resolution of the second convolutional output data;
   the first fully-connected layer (240) is configured to multiply the second convolutional output data by weights and summed per neuron; and
   the second fully-connected layer (250) is configured to classify outputs of the first fully-connected layer into predetermined intra prediction modes

   wherein a size of the second filter kernel is dependent on a size of the block and the size of the second filter kernel in the case where the block is not smaller than $16 \times 16$ is larger than the size of the second filter kernel in the case where the block is smaller than $16 \times 16$.

8. A computer program with program code means for performing all steps according to claim 7 if the program is executed on a computer or a digital signal processor, or
   a computer program product having a computer readable medium with stored program code means for performing all steps according to claim 7 if the program is executed on a computer or a digital signal processor.

**Patentansprüche**

1.  Einrichtung zum Codieren eines Blocks von einem Bild unter Verwendung von Intra-Prädiktion-Codierung, die einen Prozessor (530) umfasst, wobei der Prozessor (530) für Folgendes konfiguriert ist:

    Erhalten (810) des Blocks von dem Bild;
    Verarbeiten (820) von Daten, die dem Block zugehörig sind, unter Verwendung eines neuronalen Faltungsnetzes (420), das eine erste Faltungsschicht (210), eine zweite Faltungsschicht (220), eine Pooling-Schicht (230), eine erste vollständig verbundene Schicht (240) und eine zweite vollständig verbundene Schicht (250) umfasst, wobei das neuronale Faltungsnetz (420) trainiert ist, einen Intra-Prädiktion-Modus aus einem Satz von vorbestimmten Intra-Prädiktion-Modi auszuwählen;
    Durchführen (830) eines Intra-Prädiktion-Verarbeitens für den Block nach dem ausgewählten Intra-Prädiktion-Modus;
    **dadurch gekennzeichnet, dass**:

    die erste Faltungsschicht (210) konfiguriert ist, um die Daten, die dem Block zugehörig sind, zu empfangen und erste Filterkerne mit einem ersten vorbestimmten Schritt anzuwenden, um erste Faltungsausgabedaten zu erhalten;
    die zweite Faltungsschicht (220) konfiguriert ist, um die ersten Faltungsausgabedaten zu empfangen und zweite Filterkerne mit einem zweiten vorbestimmten Schritt anzuwenden, um zweite Faltungsausgabedaten zu erhalten;
    die Pooling-Schicht (230) konfiguriert ist, um die zweiten Faltungsausgabedaten zu empfangen und die räumliche Auflösung der zweiten Faltungsausgabedaten zu reduzieren;
    die erste vollständig verbundene Schicht (240) konfiguriert ist, um die zweiten Faltungsausgabedaten mit Gewichten zu multiplizieren und pro Neuron zu summieren; und
    die zweite vollständig verbundene Schicht (250) konfiguriert ist, um Ausgaben der ersten vollständig verbundenen Schicht (240) in vorbestimmte Intra-Prädiktion-Modi einzustufen

    wobei eine Größe des zweiten Filterkerns von einer Größe des Blocks abhängig ist und die Größe des zweiten Filterkerns in dem Fall, in dem der Block nicht kleiner als $16 \times 16$ ist, größer als die Größe des zweiten Filterkerns in dem Fall ist, in dem der Block kleiner als $16 \times 16$ ist.

2.  Einrichtung nach Anspruch 1, wobei die Daten, die dem erhaltenen Block zugehörig sind, Bilddaten des Blocks umfassen, wobei die Bilddaten Leuchtdichte und/oder Chrominanz umfassen.

3.  Einrichtung nach Anspruch 2, wobei die Daten, die dem erhaltenen Block zugehörig sind, ferner nicht-Bilddaten des Blocks umfassen, wobei die nicht-Bilddaten ein beliebiges oder eine beliebige Kombination aus einer Blockgröße, einer Zielbitrate und einem Quantisierungsparameter (QP), einem Histogramm von Gradienten (histogram of gradients - HoG) und Kanteninformationen umfassen.

4.  Einrichtung nach einem der vorhergehenden Ansprüche, wobei der Prozessor (530) konfiguriert ist, um die Daten, die dem Block zugehörig sind, von rekonstruierten Daten unabhängig zu verarbeiten, die anderen Blöcken von dem Bild und/oder Intra-Prädiktion-Entscheidungen für andere Blöcke zugehörig sind.

5.  Einrichtung nach einem der vorhergehenden Ansprüche, wobei der Prozessor (530) für Folgendes konfiguriert ist:

    Verarbeiten des erhaltenen Blocks unter Verwendung eines neuronalen Netzes, das trainiert ist, eine Teilmenge von Intra-Prädiktion-Modi aus dem Satz von vorbestimmten Intra-Prädiktion-Modi für den Block auszuwählen; und
    Auswählen eines Intra-Prädiktion-Modus aus der Teilmenge von Intra-Prädiktion-Modi basierend auf der Ratenverzerrungsoptimierung (rate distortion optimization - RDO) für das Intra-Prädiktion-Verarbeiten.

6.  Einrichtung zum Codieren eines Blocks von einem Bild unter Verwendung von Intra-Prädiktion-Codieren, die einen Prozessor (530) umfasst, wobei der Prozessor (530) für Folgendes konfiguriert ist:

    Erhalten (810) eines Blocks von einem Eingabebild;
    Verarbeiten (820) von Daten, die dem erhaltenen Block zugehörig sind, um einen Intra-Prädiktion-Modus aus einem Satz von vorbestimmten Intra-Prädiktion-Modi auszuwählen;

Durchführen (830) eines Intra-Prädiktion-Verarbeitens für den Block nach dem ausgewählten Intra-Prädiktion-Modus;

wobei der Prozessor (530) konfiguriert ist, um den Intra-Prädiktion-Modus auszuwählen, der durch eine Einrichtung nach einem der vorhergehenden Ansprüche erhalten wird, wenn der gleiche Block verarbeitet wird.

7. Verfahren zum Codieren eines Blocks von einem Bild unter Verwendung von Intra-Prädiktion-Codierung, das Folgendes umfasst:

Erhalten (810) des Blocks von einem Bild;

Verarbeiten (820) von Daten, die dem Block zugehörig sind, unter Verwendung eines neuronalen Faltungsnetzes (420), das eine erste Faltungsschicht (210), eine zweite Faltungsschicht (220), eine Pooling-Schicht (230), eine erste vollständig verbundene Schicht (240) und eine zweite vollständig verbundene Schicht (250) umfasst, wobei das neuronale Faltungsnetz (420) trainiert ist, einen Intra-Prädiktion-Modus aus einem Satz von vorbestimmten Intra-Prädiktion-Modi auszuwählen;

Durchführen (830) des Intra-Prädiktion-Verarbeitens für den Block nach dem ausgewählten Intra-Prädiktion-Modus;

**dadurch gekennzeichnet, dass**:

die erste Faltungsschicht (210) konfiguriert ist, um die Daten, die dem Block zugehörig sind, zu empfangen und erste Filterkerne mit einem ersten vorbestimmten Schritt anzuwenden, um erste Faltungsausgabedaten zu erhalten;

die zweite Faltungsschicht (220) konfiguriert ist, um die ersten Faltungsausgabedaten zu empfangen und zweite Filterkerne mit einem zweiten vorbestimmten Schritt anzuwenden, um zweite Faltungsausgabedaten zu erhalten;

die Pooling-Schicht (230) konfiguriert ist, um die zweiten Faltungsausgabedaten zu empfangen und die räumliche Auflösung der zweiten Faltungsausgabedaten zu reduzieren;

die erste vollständig verbundene Schicht (240) konfiguriert ist, um die zweiten Faltungsausgabedaten mit Gewichten zu multiplizieren und pro Neuron zu summieren; und

die zweite vollständig verbundene Schicht (250) konfiguriert ist, um Ausgaben der ersten vollständig verbundenen Schicht in vorbestimmte Intra-Prädiktion-Modi einzustufen

wobei eine Größe des zweiten Filterkerns von einer Größe des Blocks abhängig ist und die Größe des zweiten Filterkerns in dem Fall, in dem der Block nicht kleiner als 16 × 16 ist, größer als die Größe des zweiten Filterkerns in dem Fall ist, in dem der Block kleiner als 16 × 16 ist.

8. Computerprogramm mit Programmcodemitteln zum Durchführen aller Schritte nach Anspruch 7, falls das Programm auf einem Computer oder auf einem digitalen Signalprozessor ausgeführt wird, oder

ein Computerprogrammprodukt, das ein computerlesbares Medium mit gespeicherten Programmcodemitteln zum Durchführen aller Schritte nach Anspruch 7 aufweist, falls das Programm auf einem Computer oder auf einem digitalen Signalprozessor ausgeführt wird.

**Revendications**

1. Appareil de codage d'un bloc d'une image à l'aide d'un codage d'intra-prédiction comprenant un processeur (530), le processeur (530) étant configuré pour :

obtenir (810) le bloc de l'image ;

traiter (820) les données associées au bloc à l'aide d'un réseau neuronal à convolution (420) comprenant une première couche à convolution (210), une seconde couche à convolution (220), une couche de regroupement (230), une première couche entièrement connectée (240) et une seconde couche entièrement connectée (250), le réseau neuronal à convolution (420) étant formé pour sélectionner un mode d'intra-prédiction à partir d'un ensemble de modes d'intra-prédiction prédéterminés ;

effectuer (830) un traitement d'intra-prédiction pour le bloc selon le mode d'intra-prédiction sélectionné ;

**caractérisé en ce que** :

la première couche à convolution (210) est configurée pour recevoir les données associées au bloc et pour appliquer des premiers noyaux de filtre avec un premier pas prédéterminé pour obtenir des premières données de sortie à convolution ;

la seconde couche à convolution (220) est configurée pour recevoir les premières données de sortie à convolution et pour appliquer des seconds noyaux de filtre avec un second pas prédéterminé pour obtenir des secondes données de sortie à convolution ;

la couche de regroupement (230) est configurée pour recevoir les secondes données de sortie à convolution et réduire la résolution spatiale des secondes données de sortie à convolution ;

la première couche entièrement connectée (240) est configurée pour multiplier les secondes données de sortie à convolution par des poids et sommées par neurone ; et

la seconde couche entièrement connectée (250) est configurée pour classer les sorties de la première couche entièrement connectée (240) en modes d'intra prédiction prédéterminés

dans lequel une taille du second noyau de filtre dépend d'une taille du bloc et la taille du second noyau de filtre dans le cas où le bloc n'est pas inférieur à $16 \times 16$ est plus grande que la taille du second noyau de filtre dans le cas où le bloc est plus petit que $16 \times 16$.

2. Appareil selon la revendication 1, dans lequel les données associées au bloc obtenu comprennent des données d'image du bloc, les données d'image comprenant la luminance et/ou la chrominance.

3. Appareil selon la revendication 2, dans lequel les données associées au bloc obtenu comprennent en outre des données de non-image du bloc, les données de non-image comprenant l'une quelconque ou toute combinaison d'une taille de bloc, d'un débit binaire cible, d'un paramètre de quantification (QP), de l'histogramme des gradients (HoG) et des informations de contour.

4. Appareil selon l'une quelconque des revendications précédentes, dans lequel le processeur (530) est configuré pour traiter les données associées au bloc indépendamment des données reconstruites associées à d'autres blocs de l'image et/ou des décisions d'intra-prédiction pour d'autres blocs.

5. Appareil selon l'une quelconque des revendications précédentes, dans lequel le processeur (530) est configuré pour :

traiter le bloc obtenu à l'aide d'un réseau neuronal formé pour sélectionner un sous-ensemble de modes d'intra-prédiction à partir de l'ensemble de modes d'intra-prédiction prédéterminés pour le bloc ; et

sélectionner un mode d'intra-prédiction dans le sous-ensemble de modes d'intra-prédiction sur la base de l'optimisation de la distorsion de débit, RDO, pour le traitement d'intra-prédiction.

6. Appareil de codage d'un bloc d'une image à l'aide d'un codage d'intra-prédiction, comprenant un processeur (530), dans lequel le processeur (530) est configuré pour :

obtenir (810) un bloc d'une image d'entrée ;

traiter (820) des données associées au bloc obtenu pour sélectionner un mode d'intra-prédiction à partir d'un ensemble de modes d'intra-prédiction prédéterminés ;

effectuer (830) un traitement d'intra-prédiction pour le bloc selon le mode d'intra-prédiction sélectionné ;

dans lequel le processeur (530) est configuré pour sélectionner le mode d'intra-prédiction obtenu par un appareil selon l'une quelconque des revendications précédentes lors du traitement du même bloc.

7. Procédé de codage d'un bloc d'une image à l'aide d'un codage d'intra-prédiction, comprenant :

l'obtentention (810) du bloc de l'image ;

le traitement (820) des données associées au bloc à l'aide d'un réseau neuronal à convolution (420) comprenant une première couche à convolution (210), une seconde couche à convolution (220), une couche de regroupement (230), une première couche entièrement connectée (240) et une seconde couche entièrement connectée (250), le réseau neuronal à convolution (420) étant formé pour sélectionner un mode d'intra-prédiction à partir d'un ensemble de modes d'intra-prédiction prédéterminés ;

la réalisation (830) d'un traitement d'intra-prédiction pour le bloc selon le mode d'intra-prédiction sélectionné ;

**caractérisé en ce que** :

la première couche à convolution (210) est configurée pour recevoir les données associées au bloc et pour appliquer des premiers noyaux de filtre avec un premier pas prédéterminé pour obtenir des premières données de sortie à convolution ;

la seconde couche à convolution (220) est configurée pour recevoir les premières données de sortie à convolution et pour appliquer des seconds noyaux de filtre avec un second pas prédéterminé pour obtenir des secondes données de sortie à convolution ;
la couche de regroupement (230) est configurée pour recevoir les secondes données de sortie à convolution et réduire la résolution spatiale des secondes données de sortie à convolution ;
la première couche entièrement connectée (240) est configurée pour multiplier les secondes données de sortie à convolution par des poids et sommées par neurone ; et
la seconde couche entièrement connectée (250) est configurée pour classer les sorties de la première couche entièrement connectée en modes d'intra-prédiction prédéterminés

dans lequel une taille du second noyau de filtre dépend d'une taille du bloc et la taille du second noyau de filtre dans le cas où le bloc n'est pas inférieur à 16 × 16 est plus grande que la taille du second noyau de filtre dans le cas où le bloc est plus petit que 16 × 16.

8. Programme informatique doté de moyens de code de programme permettant d'effectuer toutes les étapes selon la revendication 7 si le programme est exécuté sur un ordinateur ou un processeur de signaux numériques, ou un produit-programme informatique ayant un support lisible par ordinateur doté d'un moyen de code de programme stocké permettant d'effectuer toutes les étapes selon la revendication 7 si le programme est exécuté sur un ordinateur ou un processeur de signaux numériques.

current block

processor

Bit stream

Figure 1

Figure 2

Figure 3

CNN network

Available intra prediction modes

Intra picture estimation

Intra picture prediction

Input video signal

Motion compensation

Bit stream

410

Motion estimation

Figure 4

Figure 5

EP 3 545 679 B1

Figure 6

Figure 7

EP 3 545 679 B1

810 obtain a block of the image

820 process data associated to the block using a neural network, wherein the neural network is trained to select an intra-prediction mode from a set of pre-determined intra-prediction modes

830 perform intra-prediction processing for the block according to the selected intra-prediction mode.

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DILIP PRASANA KUMAR.** Intra Frame Luma Prediction using Neural Networks in HEVC. University of Texas Arlington, 22 July 2013

- VLSI friendly fast CU/PU mode decision for HEVC intra encoding: Leveraging convolution neural network. **YU XIANYU et al.** 2015 IEEE INTERNATIONAL CONFERENCE ON IMAGE PROCESSING (ICIP). IEEE, 27 September 2015, 1285-1289